# EUROPÄISCHE PATENTSCHRIFT

(11) **EP 2 545 683 B1**
(45) Veröffentlichungstag und Bekanntmachung des Hinweises auf die Patenterteilung: **24.05.2017**
(21) Anmeldenummer: 11710719.3
(22) Anmeldetag: 10.03.2011
(51) Int. Cl.: H04L 12/40, H04L 12/403, H05B 37/02, H04L 12/42

(54) **BELEUCHTUNGSSYSTEM MIT MASTER/SLAVE-BETRIEBSGERÄTEN FÜR LEUCHTMITTEL**
ILLUMINATION SYSTEM COMPRISING MASTER/SLAVE OPERATING DEVICES FOR LUMINOUS ELEMENTS
SYSTÈME D'ÉCLAIRAGE COMPRENANT DES ÉQUIPEMENTS MAÎTRES/ESCLAVES POUR DES MOYENS D'ÉCLAIRAGE

(30) Priorität: 11.03.2010 DE 102010002755
(43) Veröffentlichungstag der Anmeldung: 16.01.2013
(73) Patentinhaber: Tridonic GmbH & Co KG, 6851 Dornbirn (AT)
(72) Erfinder: JUEN, Reinhold, 6850 Dornbirn (AT)
(74) Vertreter: Rupp, Christian
(86) Internationale Anmeldenummer: PCT/EP2011/053609
(87) Internationale Veröffentlichungsnummer: WO 2011/110626

(56) Entgegenhaltungen:
- EP-A1- 1 320 222
- WO-A1-2007/013003
- WO-A1-2009/040014
- US-A1- 2004 160 199
- US-A1- 2009 051 506
- US-B1- 6 421 710

## Beschreibung

Die vorliegende Erfindung bezieht sich allgemein auf das Gebiet der busfähigen Betriebsgeräte für Leuchtmittel und insbesondere auf ein Beleuchtungssystem mit Master/Slave-Betriebsgeräten für Leuchtmittel.

Stand der Technik kann den folgenden Druckschriften entnommen werden:
- US 2009/0051506 A1, welche eine programmierbare Lichtanzeige offenbart,
- US 6 421 710 B1, welche eine Kopplungsanordnung für ein Master/Slave-Bussystem offenbart,
- US 2004/0160199 A1, welche ein gesteuertes Beleuchtungsverfahren und eine gesteuerte Beleuchtungsvorrichtung offenbart,
- WO 2009/040014 A1, welche ein Verfahren zur Konfiguration eines Beleuchtungs-Bussystems offenbart,
- EP 1 320 222 A1, welche ein Multiplex-Übertragungssystem mit In-Circuit-Adressierung offenbart, und
- WO 2007/013003 A1, welche ein Beleuchtungssystem und ein Verfahren zum Steuern einer Vielzahl von Lichtquellen offenbart.

Im Bereich der Gebäude- bzw. Beleuchtungstechnik können Betriebsgeräte untereinander verbunden und verkabelt, um beispielsweise eine zentrale Steuerung oder Regelung der einzelnen Geräte durchzuführen. Ein typisches digitales Lichtsteuersystem wird nach einer Bus-Topologie aufgebaut. Alle Teilnehmer bzw. alle Betriebsgeräte sind direkt mit einem Bus verbunden.

Alternativ dazu gibt es in der Beleuchtungstechnik auch Master/Slave oder Mutter/Tochter Systeme. Solche Systeme bezeichnen in der Regel ein lokales, auf eine einzelne Leuchte beschränktes Master/Slave System aus typischerweise zwei elektronischen Vorschaltgeräten. Die zwei Vorschaltgeräte sind meistens in einer Leuchte für einen direkten und einen indirekten Lichtanteil zuständig. Dabei besteht der Wunsch, beide Lichtanteile mittels Lichtsensor, der an einem der zwei Vorschaltgeräte angeschlossen ist, zu regeln. Die Schwierigkeit ist unterdessen die Übermittlung neuer Stellwerte vom Master, i.e. vom Vorschaltgerät mit Lichtsensor, an den Slave.

Einerseits kommt es vor, dass ein Vorschaltgerät die Rolle eines Masters nicht übernehmen kann. Entsprechend dem für Beleuchtungsanlagen ausgelegten DALI (Digital Addressable Lighting Interface) Protokoll ist so etwas z.B. nicht erlaubt. Andererseits fehlt dem Master-Vorschaltgerät notwendige Information über den Slave, insbesondere seine Adresse, um ihm Daten übersenden zu können. Lösen lassen sich diese Probleme gemäß dem Stand der Technik z.B. mittels Einsatz einer zentralen Steuereinheit, welche die entsprechenden Daten oder Dimm-Befehle von dem Master abholt und an den Slave weiterleitet.

Es ist deshalb Aufgabe der vorliegenden Erfindung, ein Master/Slave Beleuchtungssystem und -Verfahren vorzuschlagen, welche die oben genannten Nachteile beheben. Der vorliegenden Erfindung liegt insbesondere nunmehr die Aufgabe zugrunde, eine alternative bzw. bessere Master/Slave Konfiguration anzugeben, die eine Vereinfachung der Kommunikation ermöglicht.

Die Aufgabe der vorliegenden Erfindung wird durch den Gegenstand der unabhängigen Ansprüche gelöst. Vorteilhafte Weiterbildungen der Erfindung sind Gegenstand der Unteransprüche.

Ein erster Aspekt der Erfindung betrifft ein Master/Slave System (an Betriebsmitteln der Gebäudetechnik, insbesondere für Leuchtmittel, mit
- einem Master-Betriebsgerät aufweisend
   - eine Steuereinheit,
   - einen ersten Bus-Anschluss und einen zweiten Anschluss, und
   - einen Schalter zum selektiven Weiterleiten einer DC-Spannung an den zweiten Anschluss, und
- einem Slave-Betriebsgerät aufweisend einen Slave-Anschluss zum Anschließen an den zweiten Anschluss des Masters),
wobei die Steuereinheit des Master-Betriebsgeräts dem Slave-Betriebsgerät Daten durch Ansteuerung des Schalters übermittelt, und wobei das Slave-Betriebsgerät eine von der Datenübermittlung vom Master-Betriebsgerät unabhängige Spannungsversorgung aufweist. Vorzugsweise ist also der lokale Bus zwischen Master und Slave digital ausgebildet, kann aber auch analog ausgebildet sein, indem bspw. seitens des Slave-Betriebsgeräts die Dauer von Einschaltphasen des Schalters ausgewertet wird.

Die DC-Spannung kann eine intern erzeugte oder extern zugeführte Spannung des Master-Betriebsgerät sein, also bspw. eine DC-Spannung, die
- in dem Master-Betriebsgerät intern bspw. durch eine Niedervolt-Spannungsversorgung erzeugt ist, oder
- dem ersten Bus-Anschluss bspw. als Ruhepegel einer dort angeschlossenen Busleitung zugeführt ist.

Das Master/Slave System kann weiterhin aufweisen eine Zentraleinheit, die mittels des ersten Busanschlusses mit dem Master-Betriebsgerät verbunden ist,
wobei bei geschlossenem Schalter das Slave-Betriebsgerät über die eine mit dem ersten Busanschluss des Master-Betriebsgeräts verbundene Busleitung ansprechbar ist.

Das Slave-Betriebsgerät kann dazu ausgebildet sein, Daten an den zweiten Anschluss des Master-Betriebsgeräts zu senden.

Bei geschlossenem Schalter können von dem Slave-Betriebsgerät gesendete Daten an eine an dem ersten Anschluss des Master-Betriebsgeräts verbundene Busleitung übertragen werden.

Das Protokoll für eine an dem ersten Anschluss des Master-Betriebsgeräts verbundene Busleitung kann gleich oder unterschiedlich zu dem Protokoll für die Kommunikation zwischen dem Master-Betriebsgerät und dem Slave-Betriebsgerät sein.

Das Slave-Betriebsgerät kann ein Betriebsgerät für mindestens ein Leuchtmittel sein, und das Master-Betriebsgerät kann dem Slave-Betriebsgerät bspw. Dimm-Befehle für die von dem Slave-Betriebsgerät betriebenen Leuchtmittel übermitteln.

Das Master-Betriebsgerät kann einen Sensor, insbesondere einen Helligkeitssensor oder einen Anwesenheitssensor aufweisen bzw. mit einem derartigen Sensor verbunden sein, so dass das Master-Betriebsgerät Befehle bspw. abhängig von der vom Sensor erfassten Helligkeit oder Anwesenheit an das Slave-Betriebsgerät übermitteln kann.

Die vom Master-Betriebsgerät zum Slave-Betriebsgerät übertragenen Daten sind vorzugsweise nicht auf einem an dem ersten Busanschluss des Master-Betriebsgeräts angeschlossenen Bus sichtbar sind. Bspw. werden Dimmbefehle vom Master-Betriebsgerät ausschließlich vom Slave empfangen.

Das Slave-Betriebsgerät ist vorzugsweise nicht ausgehend von einem an dem Busanschluss des Master-Betriebsgeräts angeschlossenen Bus adressierbar und weist vorzugsweise keine Betriebsadresse auf.

Ein weiterer Aspekt der Erfindung betrifft ein Master-Betriebsgerät für Leuchtmittel, das für ein System nach einem der vorhergehenden Ansprüche ausgebildet ist.

Ein noch weiterer Aspekt der Erfindung betrifft ein Verfahren zur Kommunikation zwischen einem Master-Betriebsgerät und einem Slave-Betriebsgerät, wobei die Betriebsgeräte vorzugsweise Betriebsgeräte für Leuchtmittel sind,
wobei das Master-Betriebsgerät dem Slave-Betriebsgerät Daten durch Ansteuerung eines mit DC-Spannung versorgten Schalters übermittelt, und wobei das Slave-Betriebsgerät unabhängig von der Datenübermittlung mit Spannung versorgt wird.

Ein noch weiterer Aspekt betrifft eine Steuerschaltung, insbesondere Integrierte Schaltung wie bspw. ASIC, Mikrokontroller oder Hybrid davon, für ein Betriebsgerät für Leuchtmittel,
wobei die Steuerschaltung dazu ausgebildet ist, in einem Master-Betriebsgerät ein Verfahren der genannten Art zu unterstützen.

Die Erfindung betrifft auch ein Betriebsgerät für Leuchtmittel, aufweisend eine derartige Steuerschaltung.

Im Folgenden wird der Erfindungsgegenstand anhand von bevorzugten Ausführungsbeispielen, welche in den beiliegenden Zeichnungen dargestellt sind, näher erläutert.
- Fig. 1: zeigt eine schematische Darstellung eines Masters-Betriebsgeräts eines erfindungsgemäßen Master/Slave Systems.
- Fig. 2: zeigt die schematische Darstellung einer Master/Slave bzw. Mutter/Tochter Verdrahtung entsprechend der vorliegenden Erfindung.

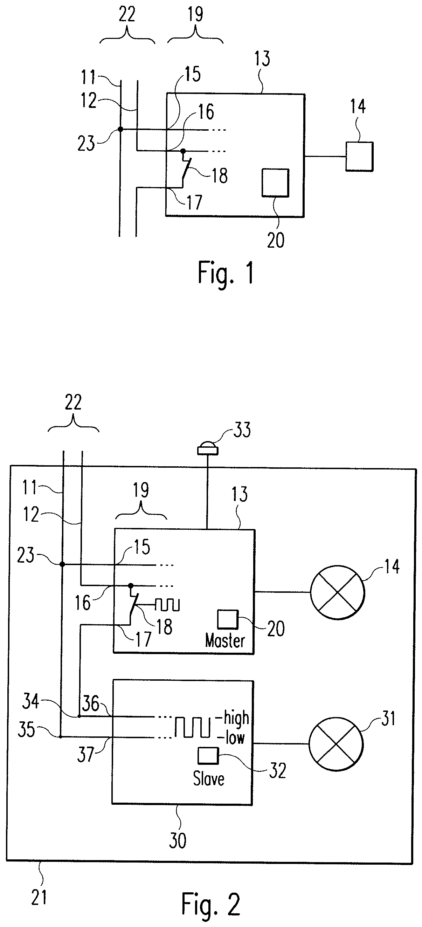

In Fig. 1 ist eine schematische Darstellung eines an einem Kommunikationsbus 22 angeschlossenen Betriebsgeräts 13 für Leuchtmittel 14 gemäß einem Ausführungsbeispiel der vorliegenden Erfindung gezeigt. Das Betriebsgerät 13 ist als Master in einer Master/Slave Steuerung bzw. Regelung ausgebildet. Die schematische Darstellung der Fig. 1 entspricht einem Teil eines in Fig. 2 gezeigten Master/Slave Beleuchtungssystems 21 bzw. Gebäudetechnik-Systems.

Unter "Master" bzw. "Slave" sind im vorliegenden Rahmen Master-Betriebsgeräte bzw. Slave-Betriebsgeräte der Gebäudetechnik, insbesondere zur Ansteuerung von Leuchtmitteln wie bspw. OLEDs, LEDs oder Gasentladungslampen, zur Ansteuerung von Aktoren wie bspw. Jalousie-Steuerungen oder zur Kommunikation mit Sensoren wie bspw. Farb-, Temperatur-, Rauch-, Brand-, Licht- oder Bewegungssensoren und jegliche Kombination davon zu verstehen.

Wie aus Fig. 2 ersichtlich, weist ein erfindungsgemäßes Master/Slave bzw. Mutter/Tochter System 21 den Master 13 sowie einen Slave 30 auf, der vorzugsweise auch als Betriebsgerät für ein Leuchtmittel 31 ausgebildet ist. Master und Slave wiesen also grundsätzlich bekannte Ansteuerschaltungen für Leuchtmittel auf, wie sie bspw. für LEDs oder OLEDs als LED-Konverter und für Gasentladungslampen als Elektronische Vorschaltgeräte bekannt sind. Dementsprechend weisen Master und Slave auch DC- oder AC-Spannungsversorgungen auf, die unabhängig von den im folgenden erläuterten globalen und lokalen Businstallationen und zugehörigen Schnittstellen vorliegen.

Das erfindungsgemäße System 21 ist also vorzugsweise ein Master/Slave System 21 der Gebäudetechnik und insbesondere der Beleuchtungstechnik. Das in Fig. 2 dargestellte Beleuchtungssystem 21 ist ein lokal kommunizierendes Master/Slave System, wobei der Master von einem globalen Bus aus angesprochen werden kann und das aus zwei Betriebsgeräten wie beispielsweise elektronischen Vorschaltgeräten für Leuchtmittel, insbesondere Glühlampen, Gasentladungslampen oder anorganischen order organischen Leuchtdioden, bestehen kann.

Die zwei Master und Slave Betriebsgeräte 13, 30 können beispielsweise in einer Leuchte jeweils für einen direkten und einen indirekten Lichtanteil zuständig sein. Alternativ kann auch das System 21 mehr als zwei Betriebsgeräte aufweisen. In diesem Fall sind vorzugsweise ein Master und mehrere Slaves vorhanden.

Der Kommunikationsbus 22 ist vorzugsweise ein Zwei-Draht Bus aufweisend zwei Leitungen in Form eines Nullleiters bzw. Neutralleiters 11 und eines Phasenleiters 12. Der Neutralleiter 11 und der Phasenleiter 12 verlaufen im Wesentlichen parallel zueinander gemäß einer Bus-Topologie, auch Linien- oder Strangtopologie genannt. Das heißt, dass alle Bus-Teilnehmer über Abgriffe direkt mit dem Bus 22 verbunden sein können.

Der Master 13 und der Slave 30 weisen vorzugsweise jeweils eine interne Steuereinheit 20, 32 auf, die dazu ausgelegt ist, das jeweils angeschlossene Leuchtmittel 14, 31 anzusteuern. Die Ansteuerung erfolgt zum Beispiel gemäß Befehlen wie Dimm-Befehlen, die dem Master 13 und dem Slave 30 zugeführt werden. Solche Befehle können beispielsweise ausgehend von einer zentralen Steuerkomponente (nicht gezeigt) über den Bus 22 dem Master 13 und dem Slave 30 zugeführt werden.

Das Master/Slave System 21 kann auch intern Dimm-Befehle vom Master 13 zum Slave 30 ausgeben, wobei diese internen Befehle unabhängig von externen Dimm-Befehlen ausgehend von einer zentralen Steuerkomponente sind. Der Master 13 ist hierzu vorzugsweise mit einem Lichtsensor 33 verbunden, und erhält somit Informationen über die Lichthelligkeit der Umgebung des Systems 21. Es kann somit auch die Helligkeit des vom Leuchtmittel 14, 31 des Masters 13 bzw. des Slaves 30 erzeugten Lichtanteils ermittelt werden. Alternativ können auch mehrere Lichtsensoren an dem Master 13 angeschlossen sein: verschiedene Sensoren erfassen z.B. die jeweilige Helligkeit von verschiedenen durch den Master oder einen Slave angesteuerten Leuchtmitteln.

Der Lichtanteil des vom Master 13 gesteuerten Leuchtmittels 14 wird derart geregelt, dass die vom Sensor 33 generierten Helligkeits-Ist-Werte vom Master empfangen werden, und von seiner internen Steuereinheit 20 in Soll-Werte für das Leuchtmittel 14 umgewandelt werden. Als Soll-Werte sind beispielsweise je nach Art des Leuchtmittels Strom-, Spannung-, und/oder Leistungs-Soll-Werte vorstellbar.

Erfindungsgemäß kann nun auch der Lichtanteil des vom Slave 30 gesteuerten Leuchtmittels 31 ausgehend von dem am Master 13 angeschlossenen Sensor 33 geregelt werden. Die Erfindung schlägt gemäss diesem Aspekt eine Lösung vor zur Übermittlung neuer Soll-Werte bzw. Stellwerte vom Master 13 mit Sensor (bspw. Lichtsensor, Anwesenheitssensor, etc.) 33 an den Slave 30, der vorzugsweise nicht direkt mit einem Sensor verbunden ist bzw. keinen Sensor aufweist.

Die Erfindung benutzt dabei eine besondere Schnittstelle 19 des Masters. Der Master 13 gemäß der vorliegenden Erfindung weist insgesamt drei Ausgänge 15, 16, 17 zum Verbinden mit dem Bus 22. Ein erster Ausgang 15 ist direkt mit dem Neutralleiter 11 vom Kommunikationsbus 22 verbindbar, wobei der Neutralleiter 11 komplett außerhalb vom Master 13 verläuft. Wie in Fig. 1 oder Fig. 2 gezeigt, ist der Ausgang 15 über einen entsprechenden Abgriff 23 mit dem Neutralleiter 11 verbunden.

Dagegen wird der Phasenleiter 12 nicht abgegriffen. Er wird einerseits zu einem zweiten Ausgang 16 des Masters 13 geführt, und andererseits zu einem dritten Ausgang 17. Der Phasenleiter 12 ist in Serie mit der zweiten und mit dem dritten Ausgang 17 verbunden bzw. der Phasenleiter 12 wird durch den zweiten und den dritten Ausgang 16, 17 durchgeschleift. Innerhalb des Masters 13 sind der zweite und der dritte Ausgang 16, 17 über einen Schalter oder Öffner 18 verbunden. Der Schalter 18 wird vorzugsweise von der Steuereinheit 20 angesteuert, d.h. entweder geöffnet oder geschlossen. Die erste, zweite und dritte Ausgänge 15, 16, 17 bilden zusammen mit dem Schalter 18 die Schnittstelle 19 des Masters 13.

Der Slave 30 ist hingegen nur über Abgriffe mit dem Bus 22 verbunden. Ein erster Eingang 36 und ein zweiter Eingang 37 des Slaves 30 sind über zwei entsprechende Abgriffe 34, 35 mit dem Phasenleiter 12 und dem Neutralleiter 11 verbunden, sehe Fig. 2.

Je nach Zustand des Schalters 18 ändert sich die Topologie des Systems 21. Bei einem geschlossenen Schalter 18 wird der Phasenleiter 12 nicht unterbrochen bzw. nicht abgeschaltet, und der erste Eingang 36 des Slaves ist mit der Busspannung verbunden. Bei einem geöffneten Schalter 18 detektiert der Slave 30 hingegen keine Busspannung. Der erste Eingang 36 des Slaves ist in diesem Fall mit dem dritten Ausgang 17 des Masters verbunden, wobei dieser dritte Ausgang 17 dann eine andere Spannung als die Busspannung und vorzugsweise eine Nullspannung aufweist.

Der zusätzliche Schalter 18 wird erfindungsgemäß dazu benutzt, digitale Nachrichten an den nachgereihten Teilnehmer bzw. an den Slave 30 zu übermitteln. Die digitalen Signale können vorzugsweise durch Modulieren der Busspannung erfolgen. Im offenen Zustand des Schalters 18 liegt am Eingang 36, 37 des Slaves 30 daher keine Busspannung an. Der Slave detektiert in diesem Fall ein sogenanntes "Low". Wird der Schalter 18 des Masters geschlossen, liegt am Eingang 36, 37 des Slaves 30 die Busspannung an. Der Slave detektiert in diesem Fall ein sogenanntes "High". Auf diese Weise kann der Master 13 durch entsprechendes Öffnen und Schließen des Schalters 18 digitale Kommandos an den Slave 30 übermitteln.

Gemäß einer alternativen Ausführungsform der Erfindung werden die dem Slave zugeführten digitalen Signale nicht etwa durch Modulieren der vom Bus 22 zur Verfügung gestellten Spannung erzeugt, sondern durch Modulieren einer alternativen Spannung. Z.B. kann als alternative Spannung eine interne Niedervoltversorgung des Masters 13 benutzt werden.

Ein weiterer Aspekt der Erfindung ist, dass diese Kommandos ausschließlich von dem Slave 30 und nicht von anderen Bus-Teilnehmern empfangen werden kann. In der Tat äußern sich das Öffnen und Schließen des Schalters 18 für den restlichen Bus 22 nur als kleine Laständerungen, die in der Regel nur sehr minimalen Schwankungen der High-Spannung bzw. Hoch-Spannung V1 des Busses bewirken.

Da ausschließlich der Slave 30 bzw. die Tochter die neuen Stellwerte des Masters 13 bzw. der Mutter empfangen kann, kann das digitale Protokoll, mit dem der Master dem Slave neue Stellwerte übermittelt, unabhängig vom Protokoll des Busses 22 gewählt werden. In einer Ausführungsform der Erfindung kann der Master z.B. einerseits an einen digitalen Bus, wie bspw. einen DALI-Bus 22 angeschlossen sein, der also das DALI (Digital Addressable Lighting Interface) Protokoll verwendet. Andererseits kann der Master den Slave 30 mit dem gleichen Protokoll, aber auch mit einem analogen oder einem abweichenden digitalen Protokoll ansteuern, wie bspw. dem zum Dimmen vom elektronischen Vorschaltgeräten ausgelegten DSI (Digital Serial Interface) Protokoll.

Da von Seite des Busses 22 und des Slaves 30 zwei unterschiedliche digitale Protokolle eingesetzt werden können, ist der Master/Slave Betrieb insofern flexibel, da z.B. die Implementierung neuer Kommandos zwischen Master und Slave jederzeit und unabhängig vom Rest des Busses 22 gemacht werden kann.

Wenn diese Master/Slave Ansteuerung nicht gebraucht wird, bleibt der Schalter 18 vorzugsweise geschlossen, so dass beide Teilnehmer, Master 13 und Slave 30, wie andere Bus-Teilnehmer funktionieren. Damit der Slave 30 auch als vollständiger Bus-Teilnehmer z.B. in einem DALI-System benutzt werden kann, ist es notwendig, dass der Slave 30 das Bus-Protokoll z.B. das DALI-Protokoll auch unterstützt und interpretieren kann.

### Bezugszeichenliste

- 11: Neutralleiter vom Kommunikationsbus
- 12: Phasenleiter vom Kommunikationsbus
- 13: Master-Betriebsgerät
- 14: Leuchtmittel
- 15: erster Ausgang
- 16: zweiter Ausgang
- 17: dritter Ausgang
- 18: Schalter
- 19: Schnittstelle
- 20: Zentraleinheit
- 21: Master/Slave Beleuchtungssystem
- 22: Kommunikationsbus
- 23: Angriff
- 30: Slave-Betriebsgerät
- 31: Leuchtmittel
- 32: Steuereinheit
- 33: Lichtsensor
- 34, 35: Abgriffe
- 36, 37: Eingänge

## Patentansprüche

1. Master/Slave System (21) an Betriebsmitteln der Gebäudetechnik, insbesondere für Leuchtmittel (14, 31), mit einem Master-Betriebsgerät (13) und einem Slave-Betriebsgerät (30), wobei das Master-Betriebsgerät (13) und das Slave-Betriebsgerät (30) an einen Kommunikationsbus (22) anschließbar ausgestaltet sind, wobei:
- das Master-Betriebsgerät (13) aufweist:
- eine Steuereinheit (20);
- einen ersten Bus-Anschluss (16) und einen zweiten Anschluss (17), wobei der zweite Anschluss (17) zum Verbinden mit einen Slave-Anschluss (36) des Slave-Betriebsgeräts (30) ausgestaltet ist; und
- einen Schalter (18), der ausgestaltet ist, den ersten Bus-Anschluss (16) und den zweiten Anschluss (17) zu verbinden und eine DC-Spannung an den zweiten Anschluss (17) selektiv weiterzuleiten, wobei:
- durch das selektive Weiterleiten der DC-Spannung eine Datenübermittlung von dem Master-Betriebsgerät (13) an das Slave-Betriebsgerät (30) vorgenommen wird,
- die DC-Spannung eine Spannung ist, die in dem Master-Betriebsgerät (13) intern erzeugt wird oder dem ersten Bus-Anschluss (16) durch den Kommunikationsbus (22) zugeführt wird, und
die Steuereinheit (20) ausgestaltet ist, die Datenübermittlung von dem Master-Betriebsgerät (13) an das Slave-Betriebsgerät (30) durch eine Ansteuerung des Schalters (18) vorzunehmen;
- das Slave-Betriebsgerät (30) den Slave-Anschluss (36) zum Anschließen an den zweiten Anschluss (17) des Masters (13) aufweist;
- das Slave-Betriebsgerät (30) eine von der Datenübermittlung vom Master-Betriebsgerät (13) an das Slave-Betriebsgerät (30) unabhängige Spannungsversorgung aufweist.

2. Master/Slave System (21) nach Anspruch 1, wobei die DC-Spannung eine Spannung ist, die
- in dem Master-Betriebsgerät (13) intern durch eine Niedervolt-Spannungsversorgung erzeugt ist, oder
- dem ersten Bus-Anschluss (16) als Ruhepegel einer dort angeschlossenen Leitung des Kommunikationsbusses (22) zugeführt ist.

3. Master/Slave System (21) nach Anspruch 1 oder 2, weiterhin aufweisend eine Zentraleinheit, die mittels dem ersten Bus-Anschluss (16) mit dem Master-Betriebsgerät (13) verbunden ist,
wobei bei geschlossenem Schalter (18) das Slave-Betriebsgerät (30) über die eine mit dem ersten Bus-Anschluss (16) des Master-Betriebsgeräts (30) verbundene Busleitung (22) ansprechbar ist.

4. Master/Slave-System (21) nach einem der vorhergehenden Ansprüche,
bei dem das Slave-Betriebsgerät (30) dazu ausgebildet ist, Daten an den zweiten Anschluss (17) des Master-Betriebsgeräts (13) zu senden.

5. Master/Slave-System (21) nach Anspruch 4,
bei dem bei geschlossenem Schalter (18) von dem Slave-Betriebsgerät (30) gesendete Daten an eine an dem ersten Bus-Anschluss (16) des Master-Betriebsgeräts (13) verbundene Busleitung (22) übertragen werden.

6. Master/Slave-System (21) nach einem der vorhergehenden Ansprüche,
wobei ein Protokoll für eine an dem ersten Bus-Anschluss (16) des Master-Betriebsgeräts (13) verbundene Busleitung (22) gleich oder unterschiedlich ist zu einem Protokoll für die Datenübermittlung zwischen dem Master-Betriebsgerät (13) und dem Slave-Betriebsgerät (30).

7. Master/Slave-System (21) nach einem der vorhergehenden Ansprüche,
wobei das Slave-Betriebsgerät (30) ein Betriebsgerät für mindestens ein Leuchtmittel (31) ist, und das Master-Betriebsgerät (13) dem Slave-Betriebsgerät (30) Dimm-Befehle für das Leuchtmittel (31) übermittelt.

8. Master/Slave-System (21) nach einem der vorhergehenden Ansprüche,
wobei das Master-Betriebsgerät (13) einen Sensor, insbesondere einen Helligkeitssensor oder einen Anwesenheitssensor (33), aufweist bzw. mit einem Sensor verbunden ist, so dass das Master-Betriebsgerät (13) Befehle abhängig von der Sensorerfassung, insbesondere abhängig von einer erfassten Helligkeit oder Anwesenheit, an das Slave-Betriebsgerät (30) übermitteln kann.

9. Master/Slave-System (21) nach einem der vorhergehenden Ansprüche,
wobei die vom Master-Betriebsgerät (13) zum Slave-Betriebsgerät (30) übertragenen Daten nicht auf einem an dem ersten Bus-Anschluss (16) des Master-Betriebsgeräts (13) angeschlossenen Kommunikationsbus (22) sichtbar sind.

10. Master/Slave-System (21) nach einem der vorhergehenden Ansprüche,
wobei das Slave-Betriebsgerät (30) ausgehend von einem an dem Bus-Anschluss (16) des Master-Betriebsgeräts (13) angeschlossenen Kommunikationsbus (22) nicht adressierbar ist.

11. Verfahren zur Kommunikation zwischen einem Master-Betriebsgerät (13) und einem Slave-Betriebsgerät (30), wobei die Betriebsgeräte vorzugsweise Betriebsgeräte für Leuchtmittel sind und wobei das Master-Betriebsgerät (13) und das Slave-Betriebsgerät (30) an einen Kommunikationsbus (22) anschließbar ausgestaltet sind,
wobei:
- ein Schalter (18) des Master-Betriebsgeräts (13) einen ersten Bus-Anschluss (16) des Master-Betriebsgeräts (13) und einen zweiten Anschluss (17) des Master-Betriebsgeräts (13) verbindet und eine DC-Spannung an den zweiten Anschluss (17) des Master-Betriebsgeräts (13) selektiv weiterleitet;
- durch das selektive Weiterleiten der DC-Spannung eine Datenübermittlung von dem Master-Betriebsgerät (13) an das Slave-Betriebsgerät (30) vorgenommen wird, wobei der zweite Anschluss (17) des Master-Betriebsgeräts (13) mit einem Slave-Anschluss (36) des Slave-Betriebsgeräts (30) ausgestaltet ist und wobei die DC-Spannung in dem Master-Betriebsgerät (13) intern erzeugt wird oder dem ersten Bus-Anschluss (16) des Master-Betriebsgeräts (13) durch den Kommunikationsbus (22) zugeführt wird;
- eine Steuereinheit (20) des Master-Betriebsgeräts (13) die Datenübermittlung von dem Master-Betriebsgerät (13) an das Slave-Betriebsgerät (30) durch eine Ansteuerung des Schalters (18) vornimmt; und
- das Slave-Betriebsgerät (30) unabhängig von der Datenübermittlung mit Spannung versorgt wird.

12. Steuerschaltung, insbesondere Integrierte Schaltung wie bspw. ASIC, Mikrokontroller oder Hybrid davon, für ein Betriebsgerät für Leuchtmittel,
wobei die Steuerschaltung dazu ausgebildet ist, in einem Master-Betriebsgerät ein Verfahren nach dem Anspruch 11 auszuführen.

13. Betriebsgerät für Leuchtmittel, aufweisend eine Steuerschaltung nach Anspruch 12.

## Claims

1. A master/slave system (21) on operating means of the building technology, in particular for light sources (14, 31), having a master operating device (13) and a slave operating device (30), wherein the master operating device (13) and the slave operating device (30) are designed to be able to connect to a communication bus (22), wherein:
- the master operating device (13) has:
- a control unit (20);
- a first bus connection (16) and a second connection (17), wherein the second connection (17) is designed for connecting with a slave-connection (36) of the slave operating device (30); and
- a switch (18), which is designed, to connect the first bus-connection (16) and the second connection (17) and to selectively forward a DC voltage to the second connection (17), wherein:
- through the selective forwarding of the DC voltage a data transmission from the master operating device (13) is made to the slave operating device (30),
- the DC voltage is a voltage, which is generated internally in the master operating device (13) or is supplied to the first bus-connection (16) by the communication bus (22), and the control unit (20) is designed to make the data transmission from the master operating device (13) to the slave operating device (30) by the actuation of the switch (18);
- the slave operating device (30) has the slave-connection (36) for connecting to the second connection (17) of the master (13);
- the slave operating device (30) has a voltage supply independent of the data transmission from the master operating device (13) to the slave operating device (30).

2. A master/slave system (21) according to Claim 1, wherein the DC voltage is a voltage, which
- is generated internally by a low-voltage power supply in the master operating device (13), or
- is supplied to the first bus-connection (16) as a quiescent level of a line of the communication bus (22) connected there.

3. A master/slave system (21) according to Claim 1 or 2, furthermore having a central unit, which is connected by means of the first bus-connection (16) with the master operating device (13),
wherein when the switch (18) is closed the slave operating device (30) can be addressed via the bus line (22) connected with the first bus-connection (16) of the master operating device (30).

4. A master/slave system (21) according to any one of the preceding claims,
in which the slave operating device (30) is designed to be able to send data to the second connection (17) of the master operating device (13).

5. A master/slave system (21) according to Claim 4,
in which when the switch (18) is closed data sent from the slave operating device (30) are transmitted to a bus line (22) connected to the first bus-connection (16) of the master operating device (13).

6. A master/slave system (21) according to any one of the preceding claims,
wherein a protocol for a bus line connected to the first bus-connection (16) of the master operating device (13) is the same as or different from a protocol for the data transmission between the master operating device (13) and the slave operating device (30).

7. A master/slave system (21) according to any one of the preceding claims, wherein the slave operating device (30) is an operating device for at least one light source (31), and the master operating device (13) transmits dimming commands for the light source (31) to the slave operating device (30).

8. A master/slave system (21) according to any one of the preceding claims, wherein the master operating device (13) has a sensor, in particular, a brightness sensor or a presence sensor (33) or is connected with a sensor, so that the master operating device (13) can transmit commands depending on the sensor detection, in particular, depending on a detected brightness or presence, to the slave operating device (30).

9. A master/slave system (21) according to any one of the preceding claims, wherein the data transmitted from the master operating device (13) to the slave operating device (30) is not visible on a communication bus (22) connected to the first bus-connection (16) of the master operating device (13).

10. A master/slave system (21) according to any one of the preceding claims, wherein the slave operating device (30) cannot be addressed starting from a communication bus (22) connected to the bus-connection (16) of the master operating device (13).

11. A method for communication between a master operating device (13) and a slave operating device (30), wherein the operating devices are preferably operating devices for light sources and wherein the master operating device (13) and the slave operating device (30) are designed to be able to connect to a communication bus (22), wherein:
- a switch (18) of the master operating device (13) connects a first bus-connection (16) of the master operating device (13) and a second connection (17) of the master operating device (13) and selectively forwards the DC voltage to the second connection (17) of the master operating device (13);
- through the selective forwarding of the DC voltage a data transmission is made from the master operating device (13) to the slave operating device (30), wherein the second connection (17) of the master operating device (13) is designed with a slave connection (36) of the slave operating device (30) and wherein the DC voltage is generated internally in the master operating device (13) or is supplied to the first bus-connection (16) of the master operating device (13) by the communication bus (22);
- a control unit (20) of the master operating device (13) makes the data transmission from the master operating unit (13) to the slave operating device (30) through an actuation of the switch (18); and
- the slave operating device (30) is supplied with voltage independently of the data transmission.

12. A control circuit, in particular, an integrated circuit such as, for example, ASIC, microcontroller or hybrid thereof, for an operating device for light sources,
wherein the control circuit is designed to carry out a method according to Claim 11 in a master operating device.

13. An operating device for light sources, having a control circuit according to Claim 12.

## Revendications

1. Système maître/esclave (21) sur des équipements de technique du bâtiment, en particulier pour des moyens d'éclairage (14, 31), avec un équipement de commande maître (13) et un équipement de commande esclave (30), l'équipement de commande maître (13) et l'équipement de commande esclave (30) étant constitués de façon connectable à un bus de communication (22) :
- l'équipement de commande maître (13) présentant :
- une unité de commande (20) ;
- une première connexion de bus (16) et une deuxième connexion (17), la deuxième connexion (17) étant constituée pour le raccordement à une connexion esclave (36) de l'équipement de commande esclave (30) ; et
- un commutateur (18) qui est constitué pour raccorder la première connexion de bus (16) et la deuxième connexion (17) et pour la transmission sélective d'une tension CC à la deuxième connexion (17) :
- une transmission de données à partir de l'équipement de commande maître (13) vers l'équipement de commande esclave (30) étant effectuée par la transmission sélective de la tension CC,
- la tension CC étant une tension qui est produite de façon interne dans l'équipement de commande maître (13) ou qui est acheminée à la première connexion de bus (16) par le bus de communication (22), et l'unité de commande (20) étant constituée pour effectuer la transmission de données à partir de l'équipement de commande maître (13) vers l'équipement de commande esclave (30) par un pilotage du commutateur (18) ;
- l'équipement de commande esclave (30) présentant la connexion esclave (36) pour la connexion à la deuxième connexion (17) du maître (13) ;
- l'équipement de commande esclave (30) présentant une alimentation en tension indépendante de la transmission de données à partir de l'équipement de commande maître (13) vers l'équipement de commande esclave (30).

2. Système maître/esclave (21) selon la revendication 1, la tension CC étant une tension qui
- est produite de façon interne dans l'appareil de commande maître (13) par une alimentation en tension basse tension, ou
- qui est acheminée à la première connexion de bus (16) en tant que niveau de repos d'une ligne du bus de communication (22) qui est connectée à cet endroit.

3. Système maître/esclave (21) selon la revendication 1 ou 2, présentant également une unité centrale qui est raccordée à l'équipement de commande maître (13) au moyen de la première connexion de bus (16),
l'équipement de commande esclave (30) étant, quand le commutateur (18) est fermé, accessible par le biais de la ligne de bus (22) raccordée à la première connexion de bus (16) de l'équipement de commande maître (30).

4. Système maître/esclave (21) selon l'une des revendications précédentes,
dans lequel l'équipement de commande esclave (30) est constitué pour envoyer des données à la deuxième connexion (17) de l'équipement de commande maître (13).

5. Système maître/esclave (21) selon la revendication 4, dans lequel, quand le commutateur (18) est fermé, des données envoyées à partir de l'équipement de commande esclave (30) sont transmises à une ligne de bus (22) raccordée à la première connexion de bus (16) de l'équipement de commande maître (13).

6. Système maître/esclave (21) selon l'une des revendications précédentes,
un protocole pour une ligne de bus (22) raccordée à la première connexion de bus (16) de l'équipement de commande maître (13) étant identique à, ou différent d'un protocole pour la transmission de données entre l'équipement de commande maître (13) et l'équipement de commande esclave (30).

7. Système maître/esclave (21) selon l'une des revendications précédentes,
l'équipement de commande esclave (30) étant un équipement de commande pour au moins un moyen d'éclairage (31), et l'équipement de commande maître (13) transmettant à l'équipement de commande esclave (30) des ordres de variation pour le moyen d'éclairage (31).

8. Système maître/esclave (21) selon l'une des revendications précédentes,
l'équipement de commande maître (13) présentant un capteur, en particulier un capteur de luminosité ou un capteur de présence (33), ou respectivement étant raccordé à un capteur de telle sorte que l'équipement de commande maître (13) peut transmettre à l'équipement de commande esclave (30) des ordres en fonction de la détection du capteur, en particulier en fonction d'une luminosité ou présence détectée.

9. Système maître/esclave (21) selon l'une des revendications précédentes,
les données transmises à partir de l'équipement de commande maître (13) vers l'équipement de commande esclave (30) n'étant pas visibles sur un bus de communication (22) connecté à la première connexion de bus (16) de l'équipement de commande maître (13).

10. Système maître/esclave (21) selon l'une des revendications précédentes,
l'équipement de commande esclave (30) n'étant pas adressable en partant d'un bus de communication (22) connecté à la connexion de bus (16) de l'équipement de commande maître (13).

11. Procédé de communication entre un équipement de commande maître (13) et un équipement de commande esclave (30), les équipements de commande étant de préférence des équipements de commande pour des moyens d'éclairage, et l'équipement de commande maître (13) et l'équipement de commande esclave (30) étant constitués de façon connectable à un bus de communication (22) :
- un commutateur (18) de l'équipement de commande maître (13) raccordant une première connexion de bus (16) de l'équipement de commande maître (13) et une deuxième connexion (17) de l'équipement de commande maître (13), et transmettant sélectivement une tension CC à la deuxième connexion (17) de l'équipement de commande maître (13) ;
- une transmission de données à partir de l'équipement de commande maître (13) vers l'équipement de commande esclave (30) étant effectuée par la transmission sélective de la tension CC, la deuxième connexion (17) de l'équipement de commande maître (13) étant constituée avec une connexion esclave (36) de l'équipement de commande esclave (30), et la tension CC étant produite de façon interne dans l'équipement de commande maître (13) ou étant acheminée à la première connexion de bus (16) de l'équipement de commande maître (13) par le bus de communication (22) ;
- une unité de commande (20) de l'équipement de commande maître (13) effectuant la transmission de données à partir de l'équipement de commande maître (13) vers l'équipement de commande esclave (30) par un pilotage du commutateur (18) ; et
- l'équipement de commande esclave (30) étant alimenté en tension indépendamment de la transmission de données.

12. Circuit de commande, en particulier circuit intégré comme par exemple un ASIC, un microcontrôleur ou un hybride de ceux-ci, pour un équipement de commande pour des moyens d'éclairage,
le circuit de commande étant constitué pour effectuer dans un équipement de commande maître un procédé selon la revendication 11.

13. Equipment de commande pour des moyens d'éclairage, présentant un circuit de commande selon la revendication 12.
